(19)

Europäisches
Patentamt
European
Patent Office
Office européen
des brevets

(11) **EP 2 988 429 A1**

(12) **EUROPEAN PATENT APPLICATION**

(43) Date of publication:
**24.02.2016 Bulletin 2016/08**

(21) Application number: **14306288.3**

(22) Date of filing: **19.08.2014**

(51) Int Cl.:
*H04B 7/02* (2006.01)  *H04W 16/28* (2009.01)
*H04W 72/04* (2009.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **ALCATEL LUCENT
92100 Boulogne-Billancourt (FR)**

(72) Inventor: **Gerlach, Christian
70435 Stuttgart (DE)**

(74) Representative: **Hofmann, Dirk et al
Alcatel-Lucent Deutschland AG
Intellectual Property Business Group
Lorenzstrasse 10
70435 Stuttgart (DE)**

(54) **Coordinated beam forming in a heterogeneous radio communication network**

(57)    The embodiments of the invention relate to a method for a network node (NN-CR, MBST1, ..., MBST9) for interference coordination in a heterogeneous radio communication network (RAN). The method contains collecting at least two indications indicating interference at a first coverage area (PC1) of a first pico base station (PBS1) of the heterogeneous radio communication network (RAN) by at least two radiation beams (RB1-4, RB1-5, RB6-5, RB9-1) of a first set of at least two macro base station transmitter apparatuses (MBST1, MBST6, MBST9) of macro base station transmitter apparatuses (MBST1, ..., MBST9) of the heterogeneous radio communication network (RAN). The method further contains determining based on the at least two indications at least one first radio resource restriction adapted to restrict radiation beam transmissions via the at least two radiation beams (RB1-4, RB1-5, RB6-5, RB9-1) towards the first coverage area (PC1). The method even further contains transmitting information of the at least one first radio resource restriction to the first set (P-1). The embodiments further relate to a network node (NN-CR, MBST1, ..., MBST9) for interference coordination in a heterogeneous radio communication network (RAN), to a method for a pico base station (PBS1, PBS2) for interference coordination in a heterogeneous radio communication network (RAN) and to a pico base station (PBS1, PBS2) for interference coordination in a heterogeneous radio communication network (RAN).

FIG. 1

EP 2 988 429 A1

## Description

## FIELD OF THE INVENTION

The present invention relates to inter-cell interference coordination in a heterogeneous radio communication network which contains macro base stations and pico base stations and, more particularly but not exclusively, to coordination of radiation beams of the macro base stations being directed towards coverage areas of the pico base stations and to scheduling mobile stations by the pico base stations within a coordinated beam forming environment.

## BACKGROUND

This section introduces aspects that may be helpful in facilitating a better understanding of the invention. Accordingly, the statements of this section are to be read in this light and are not to be understood as admission about what is in the prior art.

In heterogeneous network (HetNet) scenarios using standards like e.g. Third Generation Partnership Project Long Term Evolution (3GPP LTE) standard, one or several so-called pico base stations with their pico cells are placed under the coverage of a so-called macro base station. A pico base station typically covers a small area e.g. in buildings, train stations or aircrafts or outside due to its lower power, whereas a macro base station covers a larger area than a pico base station, as e.g. an outdoor area. The pico base stations are primarily placed at segments of a coverage area of the macro base station, which have a larger data transmission requirement than other segments of the coverage area of the macro base station due to a high population of mobile stations.

Interference on radio frequency signals being received at the mobile stations which are located near a cell border of a pico radio cell is usually dominated by downlink transmission from a macro base station transmitter apparatus which provides a macro radio cell that contains the pico radio cell or overlaps with the pico radio cell. This dominating interference can be reduced or even removed for enhancing the downlink transmission from the pico base stations to their served mobile stations by avoiding certain radiation beam directions at the macro base station transmitter apparatus that have an effect on a received signal quality of the mobile stations being served by the pico base stations. Typically, the interference is reduced or removed by applying periodically so-called time restrictions in which the macro base station transmitter apparatus is not allowed to transmit radio frequency signals via those radiation beams that are directed to the coverage area of the pico radio cell. The time restrictions are usually set in a semi-statically way at the macro base station transmitter apparatus. Usually a pico base station is located not only adjacent to and within a coverage area of a single macro base station transmitter apparatus but also adjacent to further macro radio cells which are provided by further neighboring macro base station transmitter apparatuses.

## SUMMARY

An object of the embodiments of the invention is to further improve interference coordination in heterogeneous networks especially for mobile stations which are served by a pico base station and which are located at a cell border of a pico radio cell.

The object is achieved by a method for a network node for interference coordination in a heterogeneous radio communication network. The method contains collecting at least two indications indicating interference at a first coverage area of a first pico base station of the heterogeneous radio communication network by at least two radiation beams of a first set of at least two macro base station transmitter apparatuses of macro base station transmitter apparatuses of the heterogeneous radio communication network. The method further contains determining based on the at least two indications at least one first radio resource restriction adapted to restrict radiation beam transmissions via the at least two radiation beams towards the first coverage area. The method even further contains transmitting information of the at least one first radio resource restriction to the first set.

Restricting a radiation beam transmission means for example blanking a radiation beam or avoiding transmission via the radiation beam or reducing a transmission power of the radiation beam.

The object is further achieved by a network node for interference coordination in a heterogeneous radio communication network. The network node contains a collection module configured to collect at least two indications indicating interference at a first coverage area of a first pico base station of the heterogeneous radio communication network by at least two radiation beams of a first set of at least two macro base station transmitter apparatuses of macro base station transmitter apparatuses of the heterogeneous radio communication network. The network node further contains a determination module configured to determine based on the at least two indications at least one first radio resource restriction adapted to restrict radiation beam transmissions via the at least two radiation beams towards the first coverage area. The network node even further contains a transmission module configured to transmit information of the at least one first radio resource restriction to the first set. The network node may be operable as one of the macro base station transmitter apparatuses of the heterogeneous radio communication network or may be operable as an additional network node of the heterogeneous radio communication network.

The object is even further achieved by a method for a pico base station for interference coordination in a heterogeneous radio communication network. The method for the pico base station contains receiving information of at least one radio resource restriction to be applied at a set of at least two macro base station transmitter apparatuses of macro base station transmitter apparatuses of the heterogeneous radio communication network, The method for the pico base station further contains receiving from at least one mobile station being served by the pico base station at least two indications indicating interference by at least two radiation beams of macro base station transmitter apparatuses of the heterogeneous radio communication network at a coverage area of the pico base station. The method for the pico base station further contains scheduling the at least one mobile station using at least one radio resource correlated to the at least one radio resource restriction, when the at least two indications or previously stored indications correlate to the information of the at least one first radio resource restriction or when in case of correlation the at least one mobile station is considered to be at a cell border of the coverage area for example based on path loss measurements.

The object is even further achieved by a pico base station for interference coordination in a heterogeneous radio communication network. The pico base station contains a first receiver module configured to receive information of at least one radio resource restriction to be applied at a set of at least two macro base station transmitter apparatuses of macro base station transmitter apparatuses of the heterogeneous radio communication network for restricting radiation beam transmissions via at least two first radiation beams towards a coverage area of the pico base station. The pico base station further contains a second receiver module configured to receive from at least one mobile station being served by the pico base station at least two indications indicating interference by at least two second radiation beams of macro base station transmitter apparatuses of the heterogeneous radio communication network at the coverage area of the pico base station. The pico base station even further contains a scheduler module configured to schedule the at least one mobile station using at least one radio resource correlated to the at least one radio resource restriction, when the at least two indications or previously stored indications correlate to the information of the at least one first radio resource restriction or when in case of correlation the at least one mobile station is considered to be at a cell border of the coverage area for example based on path loss measurements.

The embodiments provide an advantage of coordinating multiple radio resource restrictions of multiple macro base station transmitter apparatuses. Such coordination reduces interference in cell border areas of pico base stations which are part of the heterogeneous radio communication network. A maximum SINR improvement (SINR = Signal to Interference-plus-Noise Ratio) of about 20 dB may be reached. Thereby, data throughput especially at a cell border of pico base stations is improved while at a same time performance and data throughput at the macro base station transmitter apparatuses of the heterogeneous radio communication network isn't impacted too much. The embodiments further allow working with distributed independent schedulers at the macro base station transmitter apparatuses. The distributed independent schedulers are only informed about the radio resource restrictions by signaling for example via a so-called X2 interface such as used in 3GPP LTE and exploit them, but a centralization of schedulers is not necessary. According to a further advantage, each of the macro base station transmitter apparatuses may at a same time schedule mobile stations served by this macro base station transmitter apparatus via radiation beams which are not directed to a pico radio cell of a pico base station and apply radio resource restrictions to one further radiation beam or several further radiation beams to reduce interference at the pico radio cell of the pico base station.

According to a preferred embodiment, the information contains with respect to a first one of the at least two macro base station transmitter apparatuses of the first set information of at least one radio resource and first information of at least one radiation beam to be blanked, avoided or power reduced for the at least one radio resource at the first one of the at least two macro base station transmitter apparatuses and further contains with respect to at least one second of the at least two macro base station transmitter apparatuses of the first set the information of the at least one radio resource and at least second information of at least one further radiation beam to be blanked, avoided or power reduced for the at least one radio resource at the at least one second of the at least two macro base station transmitter apparatuses. Preferably, the at least one radio resource is a time resource or a frequency resource, the first information contains at least one first pre-coding matrix indicator and the at least second information contains at least one second pre-coding matrix indicator.

According to a further preferred embodiment, the method for the network node further contains predefining a maximum number of macro base station transmitter apparatuses of the first set for which radio resource restrictions are going to be determined with respect to the first pico base station. Thereby, a determination of radio resource restrictions may be simplified and may be performed in a faster way because only a limited number of macro base station transmitter apparatuses is taken into account for applying the radio resource restrictions with respect to the single pico base station.

Regarding several further embodiments, the collecting of the at least two indications may contain at least one of the following:

- receiving at least one of the at least two indications from at least one mobile station being served by the first pico base station, preferably when the heterogeneous radio communication network operates in a frequency division duplex transmission mode,

- receiving at least one of the at least two indications from a macro base station transceiver apparatus belonging to the first set, preferably when the heterogeneous radio communication network operates in a time division duplex transmission mode and uplink transmissions from mobile stations can be exploited as indications for the interference being generated by the at least two radiation beams, or

- collecting at least one of the at least two indications from a database of the heterogeneous radio communication network and the database may contain a mapping between locations of coverage areas of radiation beams of the macro base station transmitter apparatuses and locations of coverage areas of pico base stations overlapping with the locations of the coverage areas of the radiation beams.

The database may be an internal database or an external database of the network node which determines the radio resource restrictions. When the database is an external database the collecting may contain receiving or requesting the at least one of the at least two indications from the external database of the heterogeneous radio communication network.

In a further preferred embodiment, the method for the network node further contains collecting at least two further indications indicating interference at at least one second coverage area of at least one second pico base station of the heterogeneous radio communication network by at least two further radiation beams of at least one second set of at least two macro base station transmitter apparatuses of the macro base station transmitter apparatuses of the heterogeneous radio communication network. According to the further preferred embodiment, the method for the network node even further contains determining based on the at least two further indications at least one second radio resource restriction adapted to restrict further radiation beam transmissions via the at least two further radiation beams towards the at least one second coverage area. The method for the network node with respect to the further preferred embodiment even further contains transmitting further information of the at least one second radio resource restriction to the at least one second set.

Preferably, the determining of the at least one first radio resource restriction and the determining of the at least one second radio resource restriction coordinates simultaneously radio resource restrictions at the first set with respect to the first pico base station and at the at least one second set with respect to the at least one second pico base station. This allows coordinating radio resource restrictions simultaneously for more than one pico base station of the heterogeneous radio communication network.

In an even further preferred embodiment, the determining of the at least one first radio resource restriction and the determining of the at least one second radio resource restriction allocates radio resource restrictions in such a way that for each macro base station transmitter apparatus of the first set and of the at least one second set only a single radiation beam restriction corresponding to a single indication for a single coverage area is allocated.

In one embodiment, the determining of the at least one first radio resource restriction and the determining of the at least one second radio resource restriction contains determining the first set and allocating the at least one first radio resource restriction to a radio resource segment of a predefined group of radio resources. The determining of the at least one first radio resource restriction and the determining of the at least one second radio resource restriction further contains determining the at least one second set and allocating the at least one second radio resource restriction to the radio resource segment, when none macro base station transmitter apparatus of the at least second set belongs to the first set and else allocating the at least one second radio resource restriction to a second radio resource segment of the predefined group of radio resources for a predefined number of pico base stations of the heterogeneous radio communication network. This embodiment describes a sorting method by which each macro base station transmitter apparatus of the heterogeneous radio communication network is operated at a specific time only with radio resource restrictions for a single pico base station. This allows the macro base station transmitter apparatus scheduling its own mobile stations with a sufficient high data throughput because not too much radiation beams of the macro base station transmitter apparatus are operated with restricted radiation beam transmissions simultaneously for reducing interference at at least one pico radio cell.

In a further embodiment, the determining of the at least one first radio resource restriction and the determining of the at least one second radio resource restriction is executed for all pico base stations within a predefined area of the heterogeneous radio communication network. This embodiment allows to split an overall coverage area of the heterogeneous radio communication network into several predefined areas and a first instance of the method may coordinate radio beam transmissions from macro base station transmitter apparatuses for all pico base stations within a first one of the predefined areas and at least one second instance of the method may coordinate radio beam transmissions from macro base station transmitter apparatuses for all pico base stations within at least one second of the predefined areas.

According to a further preferred embodiment, the method for the pico base station further contains verifying based on path loss measurements, whether the at least one mobile station is located at a cell border of the pico base station and scheduling the at least one mobile station using the at least one radio resource of the at least one radio resource restriction, when the at least one mobile station is located at the cell border. This provides the advantage that the radio resource restrictions at the surrounding macro base station and antenna systems are primarily used for mobile stations at the cell border of the pico base stations, which are more impacted by interference from downlink transmission of surrounding macro base station transmitter apparatuses than the mobile stations which are located in a cell center of the pico cell.

Preferably, the determining of the at least one first radio resource restriction and the determining of the at least one second radio resource restriction determines radio resource restrictions by avoiding overlapping restrictions in each macro base station transmitter apparatus for radio resources of the predefined group of radio resources. This provides the advantage that the schedulers of the macro base station transmitter apparatuses obtain a sufficient large area within the predefined group of radio resources without any radio resource restrictions for scheduling the mobile stations which are served by the macro base station transmitter apparatuses. For such a determination of the radio resource restriction efficient packing algorithms can be used which are known to skilled persons in the art.

In a further embodiment, the determining of the at least one first radio resource restriction and the determining of the at least one second radio resource restriction determines the at least one first radio resource restriction and the at least one second radio resource restriction in a first part of the predefined group of radio resources and determines further radio resource restrictions for the first pico base station and the at least one second pico base station in at least one second part of the predefined group of radio resources. Thereby, the same radio resource restrictions are applied in a further part of the predefined group of radio resources without being required to perform a further determination of radio resource restriction for each one of the pico base stations for allowing the pico base stations to schedule mobile stations especially at the cell border with a doubled or even multiplied number of times for being protected against interference from downlink transmissions via radiation beams of surrounding macro base station transmitter apparatuses.

Further advantageous features of the embodiments of the invention are defined in the dependent claims and are described in the following detailed description.

## BRIEF DESCRIPTION OF THE FIGURES

The embodiments of the invention will become apparent in the following detailed description and will be illustrated by accompanying figures given by way of non-limiting illustrations.

Figure 1 shows schematically a heterogeneous radio access network for implementing various embodiments of the invention.

Figure 2 shows schematically a flow diagram of a method for a network node for operation in a heterogeneous radio access network and for coordinating radio resource restrictions at macro base station transmitter apparatuses of the heterogeneous radio access network according to the embodiments of the invention.

Figure 3 shows a table with rows for a predefined number of macro base station transmitter apparatuses serving each a macro radio cell and with columns for a predefined number of radio resources. The table further shows several sets of at least two macro base station apparatuses which are allocations of macro base station transmitter apparatuses to specific pico radio cells for specific radio resources which are applied as radio resource restrictions.

Figure 4 shows schematically a flow diagram of a method for a pico base station for operation in a heterogeneous radio access network and for scheduling mobile stations based on radio resource restrictions which are applied at the surrounding macro base station transmitter apparatuses.

Figure 5 shows schematically a block diagram of a network node for operation in a heterogeneous radio access network and for coordinating radio resource restrictions at macro base station transmitter apparatuses of the heterogeneous radio access network according to the embodiments of the invention.

Figure 6 shows schematically a block diagram of a pico base station for operation in a heterogeneous radio access network and for scheduling mobile stations based on radio resource restrictions which are applied at the surrounding macro base station transmitter apparatuses.

## DESCRIPTION OF THE EMBODIMENTS

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

A splitting of processing functions across processing units shown in the Figures is not critical, and as can be understood by those skilled in the art that the number of processing units, the number of processing functions and an allocation of the processing functions to the processing units may vary without departing from the scope of the embodiments of the invention as defined in the appended claims. The number of the steps for performing the method(s) is not critical, and as can be understood by those skilled in the art that the number of the steps and the sequence of the steps may vary without departing from the scope of the embodiments of the invention as defined in the appended claims.

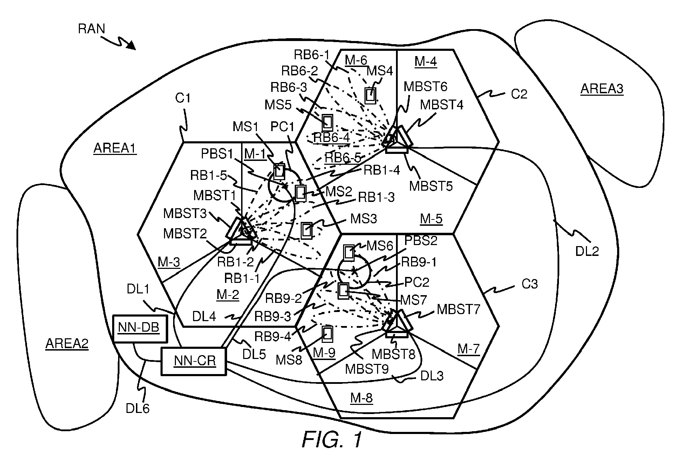

Figure 1 shows schematically a heterogeneous radio access network or heterogeneous radio communication network RAN. An overall coverage area of the heterogeneous radio access network RAN may be split into several sub-areas AREA1, AREA2, AREA3. The sub-areas AREA1, AREA2, AREA3 may be for example similar to sub-areas, which are managed by a single RNC (RNC = Radio Network Controller) in UMTS (UMTS = Universal Mobile Telecommunication Systems). Alternatively, the overall coverage area of the heterogeneous radio access network RAN may be a single area which is not split in such sub-areas.

The heterogeneous radio access network RAN may be for example a radio access network of a cellular mobile communication system such as GSM/GPRS (GSM = Global System for Mobile Communication, GPRS = General Packet Radio Service), UMTS (UMTS = Universal Mobile Telecommunication Systems), HSPA (HSPA = High Speed Packet Access), LTE (LTE = Long Term Evolution) or LTE-Advanced, which are all standardized by 3GPP (3GPP = 3rd Generation Partnership Project). Alternatively, the heterogeneous radio access network RAN may be a WLAN (WLAN = Wireless Local Area Network) which may be based on one of the IEEE 802.11 standards. In a further alternative, the heterogeneous radio access network RAN may be for example a WiMAX network (WiMAX = Worldwide Interoperability for Microwave Access) based on one of the IEEE 802.16 standards for enabling a delivery of last mile wireless broadband access as an alternative to cable and DSL (DSL = Digital Subscriber Line). In even further alternatives, the radio acces network RAN1 may be based on one of the CDMA family of standards including cdmaOne, CDMA2000, and CDMA2000 EV-DO which are standardized by 3GPP2 (3GPP2 = 3rd Generation Partnership Project 2).

The terms "heterogeneous radio access network" or "HetNet" may be considered synonymous to and/or referred to a use of multiple types of access nodes in a wireless network. The wireless network may use a mixture of macro radio cells, pico radio cells, and/or femto radio cells in order to offer wireless coverage in an environment with a wide variety of wireless coverage zones, ranging from an open outdoor environment to office buildings, homes, and underground areas.

Only a first sub-area AREA1 of the several sub-areas AREA1, AREA2, AREA3 is shown in more detail for simplification. The heterogeneous radio access network RAN contains exemplarily within the first sub-area AREA1 a first pico base station PBS1, a second pico base station PBS2, a first macro base station, a second macro base station and a third macro base station. For simplification, the macro base stations are not shown in detail and only macro base station transmitter apparatuses MBST1, ..., MBST9 of the macro base stations are indicated by rectangles. Each one of the macro base station transmitter apparatuses MBST1, ..., MBST9 contains a transmitter module and an antenna system which is connected to the transmitter module. Similarly, the pico base stations PBS1, PBS2 are not shown in detail and are indicated by crosses.

The first macro base station contains a first macro base station transmitter apparatus MBST1, a second macro base station transmitter apparatus MBST2 and a third macro base station transmitter apparatus MBST3. In a same way the second macro base station contains a fourth macro base station transmitter apparatus MBST4, a fifth macro base station transmitter apparatus MBST5 and a sixth macro base station transmitter apparatus MBST6 and the third macro base station contains a seventh macro base station transmitter apparatus MBST7, an eighth macro base station transmitter apparatus MBST8 and a ninth macro base station transmitter apparatus MBST9. Further macro base station transmitter apparatuses of further macro base stations and further pico base stations are not shown for simplification.

The term "macro base station" may be considered synonymous to and/or referred to a base station, which provides wireless coverage for one macro radio cell or several macro radio cells having a size in a range of several hundred meters up to several kilometres and may describe equipment that provides wireless connectivity via one or more radio links to one or more mobile stations. The macro base station contains one or several macro base station transmitter apparatuses for downlink transmission from the macro base station to one or several mobile stations and further contains one or several macro base station receiver apparatuses sharing antenna systems with one or several macro base station transmitter apparatuses for receiving uplink transmissions from the one or several mobile stations. A macro base station transmitter apparatus usually has a maximum output power of typically tens of watts.

The term "macro radio cell" may be considered synonymous to and/or referred to a radio cell, which provides the widest range of all radio cell sizes. Macro cells are usually found in rural areas or along highways.

The term "pico base station" may be considered synonymous to and/or referred to a base station which provides wireless coverage by typically a single pico radio cell for example in buildings (offices, shopping malls, train stations, stock exchanges, etc.), or more recently in aircrafts or trains and may describe further equipment that also provides wireless connectivity via one or more radio links to one or more mobile stations. In cellular networks, pico radio cells are typically used to extend coverage to indoor areas where outdoor signals do not reach well, or to add network capacity in areas with very dense phone usage, such as train stations.

The heterogeneous radio access network RAN as shown in Figure 1 further contains within the first sub-area AREA1 a network node NN-CR for coordinating radio resource restrictions at the macro base stations and a central database NN-DB for the first area AREA1. The central database NN-DB is shown in Figure 1 as a separate network node. According to further embodiments, the central database NN-DB may be part of the network node NN-CR or of one of the macro base stations of the first sub-area AREA1.

According to an even further embodiment, all functionality of the network node NN-CR may be implemented in one of the macro base stations of the first sub-area AREA1 and therefore the network node NN-CR may be not required.

The first macro base station provides network coverage for three macro radio cells M-1, M-2 and M-3 constituting a first macro base station coverage area C1. In a same way, the second macro base station provides network coverage for three further macro radio cells M-4, M-5, M-6 constituting a second macro base station coverage area C2 and the third macro base station provides network coverage for three even further macro radio cells M-7, M-8 and M-9 constituting a third macro base station coverage area C3. The macro base station coverage areas C1, C2, C3 are schematically shown as hexagons which are in contact to each other and which provide for a continuous coverage.

Alternatively, the macro base station coverage areas C1, C2, C3 may be split into only two macro radio cells or into more than three macro radio cells.

The first macro base station transmitter apparatus MBST1 provides network coverage for the first macro radio cell M-1. In a same way each of the further macro base station transmitter apparatuses MBST2, ..., MBST9 provides network coverage for one of the further macro radio cells M-2, ..., M-9 as shown in Figure 1.

The first pico base station PBS1 is located within the first macro radio cell M-1 and provides network coverage for a first pico radio cell PC1. In a similar way, the second pico base station PBS2 is located within the ninth macro radio cell M-9 and provides network coverage for a second pico radio cell PC2.

Mobile stations MS1, MS2 are located within the first pico radio cell C1 near a cell border of the first pico radio cell PC1. Mobile station MS3 is located within first macro radio cell M-1 but outside the first pico radio cell PC1. In a similar way, mobile stations MS6, MS7 are located within the second pico radio cell PC2 near a cell border of the second pico radio cell PC2 and mobile station MS8 is located within ninth macro radio cell M-9 but outside the second pico radio cell PC2. Mobile stations MS4, MS5 are located within sixth macro radio cell M-6. Further mobile stations for further macro radio cells are not shown for simplification.

The term "mobile station" may be considered synonymous to, and may hereafter be occasionally referred to, as a mobile unit, mobile user, access terminal, user equipment, subscriber, user, remote station or a small cell, pico cell or femto cell when located in a moving vehicle such as a bus, a train or even a car. Each of the mobile stations MS1, ..., MS8 may be for example a cellular telephone, a smart phone, a portable computer, a pocket computer, a hand-held computer, a personal digital assistant, a moving base station, a smart watch, a head mounted display such as a Google glass or a car-mounted mobile device such as a repeater or relay.

The first macro base station transmitter apparatus MBST1 exemplarily applies five radiation beams RB1-1, RB1-2, RB1-3, RB1-4, RB1-5 for covering the first macro cell M-1. In a similar way, the sixth macro base station transmitter apparatus MBST6 applies five radiation beams RB6-1, RB6-2, RB6-3, RB6-4, RB6-5 for covering the sixth macro radio cell M-6 and the ninth macro base station transmitter apparatus MBST9 applies four radiation beams RB9-1, RB9-2, RB9-3, RB9-4 for covering the ninth macro radio cell M-9. Further radio beams for further macro radio cells are not shown for simplification.

The first macro base station is connected to the network node NN-CR by a first data link DL1 such as a so-called 3GPP LTE X2 interface. In a same way, the second macro base station is connected to the network node NN-CR by a second data link DL2 and the third macro base station is connected to the network node NN-CR by a third data link DL3.

The first pico base station PBS1 is also connected to the network node NN-CR by a fourth data link DL4 such as a further 3GPP LTE X2 interface. In a same way, the second pico base station PBS2 is connected to the network node NN-CR by a fifth data link DL5.

The network node NN-CR is connected to the network node NN-DB by a sixth data link DL6 such as an IP-connection or proprietary interface or an even further 3GPP LTE X2 interface.

The data links DL1, ..., DL6 may be preferably wired data links or cable data links.

The heterogeneous radio access network RAN may contain further interfaces and connections between the macro base stations such as X2 interfaces as applied for LTE radio access networks. Such interfaces are not shown in Figure 1 for simplification.

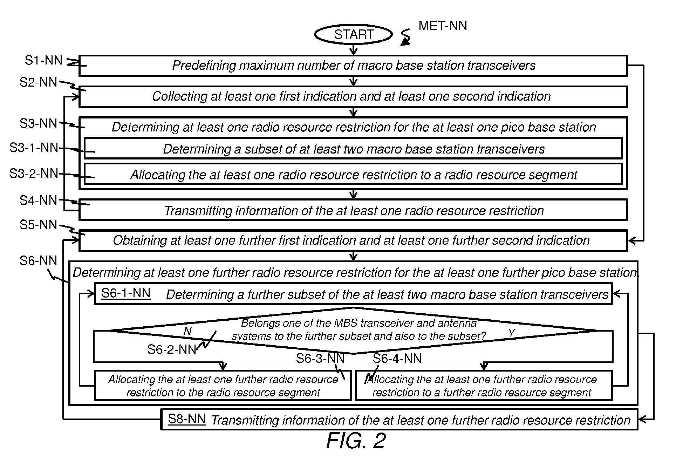

The main principle of the embodiments is described in following paragraphs in an exemplarily way. Further details of the embodiments will be given below with respect to Figure 2 to Figure 6.

Mobile stations MS1, MS2 which are served by the first pico base station PBS1 may report or transmit so-called worst PMIs (PMI = pre-coding matrix indicator) via radio uplinks to the first pico base station PBS1. Such PMIs belong to radiation beams RB1-4, RB1-5, RB6-5, RB9-1 which are detected by the mobile stations MS1, MS2 to be radiation beams with a strongest interference or to be radiation beams with an interference coming from neighbouring macro base station transmitter apparatuses and being equal to or above a predefined interference value. The predefined interference value may be for example a so-called serving cell signal strength minus 6 dB. The mobile stations MS1, MS2 obtain the PMIs of the radiation beams for example from reference signals such as CSI-RS (CSI = channel state information, RS = reference signal) which are transmitted from the neighbouring macro base station transmitter apparatuses. In a similar way, mobile stations MS6, MS7 which are served by the second pico base station PBS2 may report further worst PMIs via further radio uplinks to the second pico base station PBS2. The first pico base station PBS1 transmits the worst PMIs via the fourth data link DL4 to the network node NN-CR. Equally, the second pico base station PBS2 transmits the further worst PMIs via the fifth data link DL5 to the network node NN-CR.

By receiving the worst PMIs and the further worst PMIs at the network node NN-CR, the network node NN-CR obtains interference information, which of the radiation beams of the macro base station transmitter apparatuses MBST1, ..., MBST9 provide interference to mobile stations which are located within the pico radio cells PC1, PC2 and which are served by the pico base stations PBS1, PBS2. The network node NN-CR applies the interference information for determining one or several radio resource restrictions for the macro base station transmitter apparatuses MBST1, ..., MBST9. The determined one or several radio resource restriction should be or must be applied by two or more of the macro base station transmitter apparatuses MBST1, ..., MBST9 for reducing or eliminating interference with respect to at least one of the pico base stations PBS1, PBS2. The network node NN-CR may determine for example a first radio resource restriction for the first macro base station transmitter apparatus MBST1 with respect to the first pico base station PBS1 such as a specific time slot and specific radiation beams (here for radiation beams RB1-4, RB1-5 in macro radio cell M-1), which should be or must be blanked or avoided or which should be or must be transmitted with a reduced transmission power during the specific time slot.

Blanking or avoiding means that the first macro base station transmitter apparatus MBST1 does not send any radio frequency signals via the specific restricted radiation beams during the specific time slot or only with a pre-coding vector that has very low correlation with a further pre-coding vector being applied when the radiation beam has no restricted radiation beam transmission (e.g. an angle between the pre-coding vector and the further pre-coding vector may be in a range of 90°). Reduced transmission power means that for example the transmit power is reduced by 10 dB compared to normal (full) power transmission applied to other radiation beams.

In a same way, the network node NN-CR may determine for example a second radio resource restriction for the sixth macro base station transmitter apparatus MBST6 with respect to the first pico base station PBS1 such as the same specific time slot and further specific radiation beams (here for radiation beam RB6-5 in the sixth macro radio cell M-6), which should be or must be blanked or avoided or which should be or must be transmitted with reduced transmission power during the specific time slot. Also in a same way, the network node NN-CR may determine for example a third radio resource restriction for the ninth macro base station transmitter apparatus MBST9 with respect to the first pico base station PBS1 such as the same specific time slot and further specific radiation beams (here for radiation beam RB9-1 in the ninth macro radio cell M-9), which should be or must be blanked or avoided or which should be or must be transmitted with reduced transmission power during the specific time slot.

The network node NN-CR transmits first information of the first radio resource restriction via the first data link DL1 to the first macro base station, further transmits second information of the second radio resource restriction via the second data link DL2 to the second macro base station and further transmits third information of the third radio resource restriction via the third data link DL3 to the third macro base station.

When preferably the macro base stations are required to follow the result of the determination of the network node NN-CR with respect to the determined radio resource restrictions, the network node NN-CR may transmit at a same time the first information and the second information via the fourth data link DL4 to the first pico base station PBS1.

When elsewise the macro base stations must not directly follow the result of the determination of the network node NN-CR with respect to the determined radio resource restrictions and may decide by their own whether they will follow or partially follow the result of the determination of the network node NN-CR, each of the macro base stations which will follow or partially follow the result of the determination of the network node NN-CR may transmit information of the radio resource restriction to a corresponding pico base station or several pico base stations in a neighbourhood of the corresponding macro base station. With respect to the above given example, the first macro base station may transmit the first information to the first pico base station PBS1 via a wireline data link or a wireless data link between the first macro base station and the first pico base station PBS1. In a same way the second macro base station may transmit the second information to the first pico base station PBS1 and the third macro base station may transmit the third information also to the first pico base station PBS1.

The first pico base station PBS1 compares the first information, the second information and the third information with worst PMIs currently received from the mobile stations MS1, MS2 or with further worst PMIs which have been previously reported from the mobile stations MS1, MS2 and which have been buffered in a local memory of the first pico base station PBS1. When the worst PMIs and/or the further worst PMIs fit or are equal to the radiation beams, which are indicated by the first information, the second information and the third information, the first pico base station PBS1 schedules one or both of the mobile stations MS1, MS2 using the specific time slot which is indicated by the first information and the second information preferably when the mobile station MS1, MS2 are at the cell border of the first pico radio cell PC1.

In a similar way, the main principle of the embodiments is also applied with respect to the second pico base station PBS2 and to further pico base stations as part of the first sub-area AREA1 which are not shown for simplification. Equally, the main principle of the embodiments is also applied to pico base stations of the second sub-area AREA2 and of the third sub-area AREA3.

Instead of transmitting the worst PMIs and the further worst PMIs to the network node NN-CR, the network node NN-CR may request the central database NN-DB which one of the radiation beams of the macro base station transmitter apparatuses MBST1, ..., MBST9 provide interference at coverage areas of which one of the pico base stations PBS1, PBS2. Therefore, the database may for example contain a mapping between locations of coverage areas of radiation beams RB1-4, RB1-5, RB6-5, RB9-1, RB9-2 of the macro base station transmitter apparatuses MBST1, MBST6, MBST9 and locations of the pico radio cells PC1, PC2 of the pico base stations PBS1, PBS2, which overlap with the locations of the coverage areas of the radiation beams RB1-4, RB1-5, RB6-5, RB9-1, RB9-2. Alternatively, the database may contain a mapping between main directions of the radiation beams RB1-4, RB1-5, RB6-5, RB9-1, RB9-2 of the macro base station transmitter apparatuses MBST1, MBST6, MBST9 and the locations of the pico radio cells PC1, PC2 of the pico base stations PBS1, PBS2, which are intersected by the main directions of the radiation beams RB1-4, RB1-5, RB6-5, RB9-1, RB9-2. Using such an embodiment, a determination with respect to which ones of the radiation beams should be blanked or avoided or which ones of the radiation beams should be transmitted with reduced transmission power needs only to be done, if for example radiation beams are changed at one of the macro base station transmitter apparatuses MBS1, ..., MBST9 or if a location of one of the pico base stations PBS1, PBS2 or a transmit power of one of the pico base stations PBS1, PBS2 is changed. In such a case, the radiation beams to be blanked or to be avoided or to be transmitted with a reduced transmission power are preconfigured in a static way and only a number or a periodicity of radio resources used for blanking or avoiding the radiation beams or for transmitting the radiation beams with a reduced transmission power may be adapted to a number of mobile stations being located in and served by the pico base stations PBS1, PBS2. Therefore, the pico base stations PBS1, PBS2 may for example transmit to the network node NN-CR preferably in a periodic way only information about a number of mobile stations currently being served by a pico base station or information about a data rate required for serving mobile stations at a cell border of a pico radio cell.

Figure 2 shows schematically a flow diagram of a method MET-NN for the network node NN-CR for interference coordination in the heterogeneous radio access network RAN and for coordinating radio resource restrictions at the macro base station transmitter apparatuses MBST1, .., MBST9 of the heterogeneous radio access network RAN according to several embodiments.

In a first step S1-NN, a number of macro base station transmitter apparatuses may be predefined at the network node NN-CR, which should be considered when radio resource restrictions are going to be determined in step S6-NN with respect to a single pico base station. This means that an approximation is taken how many macro base station transmitter apparatuses are considered to have influence by generating interference on the mobile stations, which are located in a single pico radio cell. The influence and interference of other macro base station transmitter apparatuses is not considered for simplification and for avoiding too much unused radio resources at those macro base station transmitter apparatuses MBST1, ..., MBST9, which provide no interference or an unremarkable interference to the single pico radio cell.

The approximation may be a so-called influence length and shall be denoted $L$ as a predefined number of macro base station transmitter apparatuses for which radio resource restrictions with respect to each one of the pico base stations PBS1, PBS2 shall be determined. The predefined number may be for example three ($L = 3$), when the macro base station coverage areas C1, C2, C3 (or the macro radio cells M-1, ..., M-9) are arranged in a hexagonal way as shown in Figure 1. Alternatively, the number may be two or four depending on an arrangement of the macro radio cells and/or depending on a size of the macro base station coverage areas C1, C2, C3 and/or depending on a form of the macro base station coverage areas C1, C2, C3.

In a next step S2-NN, the network node NN-CR collects at least one first indication indicating interference at a coverage area (the first pico radio cell PC1) of the first pico base station PBS1 for example by radiation beams RB1-4, RB1-5 of the first macro base station transmitter apparatus MBST1 and at least one second indication indicating interference at the coverage area for example by radiation beam RB6-5 of the sixth macro base station transmitter apparatus MBST6. Several alternatives exist how the network node NN-CR is able to collect the at least one first indication and the at least one second indication.

In a first alternative, at least one of the at least one first indication and the at least one second indication may be collected by receiving the at least one of the at least one first indication and the at least one second indication from at least one of the mobile stations MS1, MS2 which are served by the first pico base station PBS1, preferably when the heterogeneous radio communication network RAN operates in an FDD transmission mode (FDD = frequency division duplex). Therefore, the first pico base station PBS1 may simply forward to the network node NN-CR for example the worst PMIs being received from the mobile stations MS1, MS2 or may preferably store the worst PMIs, sort the worst PMIs according to a frequency of their reporting and only forward e.g. one, two or three of most frequently reported worst PMIs for each one of the macro base station transmitter apparatuses.

According to a second alternative, at least one of the at least one first indication and the at least one second indication may be collected by receiving the at least one of the at least one first indication and the at least one second indication from the first macro base station of the first macro base station transmitter apparatus MBST1, preferably when the heterogeneous radio communication network RAN operates in a TDD transmission mode (TDD = time division duplex). In such a case the worst PMIs don't need to be transmitted from the mobile stations MS1, MS2 to the first pico base station PBS1 because uplink and downlink between the first pico base station PBS1 and the mobile stations MS1, MS2 and uplink and downlink between the first macro base station transmitter apparatus MBST1 and mobile station MBS3 are operated in a same frequency range. The mobile stations MS1, MS2 may transmit uplink reference signals for example by an omni-directional antenna. The antenna system which is connected to the macro base station transmitter apparatuses MBST1, ..., MBST9 may contain for example four antenna elements. Radiation beams RB1-1, ..., RB1-5 may be transmitted via the four antenna elements and the uplink reference signals from the mobile stations MS1, MS2 may be received via the four antenna elements and may be provided to a first macro base station receiver apparatus, which is collocated with the first macro base station transmitter apparatus MBST1 and which is connected to the antenna system. The uplink reference signals can be exploited to determine a phase difference of the received uplink reference signals between the four antenna elements of the antenna system and to determine a reception direction of the received uplink reference signals. This result can be used determine a downlink characteristic of the radiation beams in the downlink direction. Such a determination is known to skilled persons in the art and therefore not described in further detail. The reception direction can be used to estimate which radio beams provide most interference at locations of the mobile stations MS1, MS2. This estimation can also include a storing, sorting and forwarding of the worst PMIs as described above for the FDD transmission mode.

The term "reference signal" may be considered synonymous to and/or referred to as a reference symbol, SRS (SRS = Sounding reference symbol), pilot, pilot signal, pilot symbol, beacon, beacon signal etc. PMIs of the radiation beams RB1-4, RB1-5 may be transmitted as worst PMIs from the first macro base station to the network node NN-CR. A same processing and estimation may be applied at the sixth macro base station transmitter apparatus MBST6 and at the ninth macro base station transmitter apparatus MBST9 with respect to the uplink reference signals of the mobile stations MS1, MS2. This allows transmitting a PMI of the radiation beam RB6-5 as a worst PMI for the first pico radio cell PC1 from the second macro base station and a PMI of the radiation beam RB9-1 as a worst PMI for the first pico radio cell PC1 from the third macro base station to the network node NN-CR.

In a third alternative, at least one of the at least one first indication and the at least one second indication may be obtained from the database NN-DB.

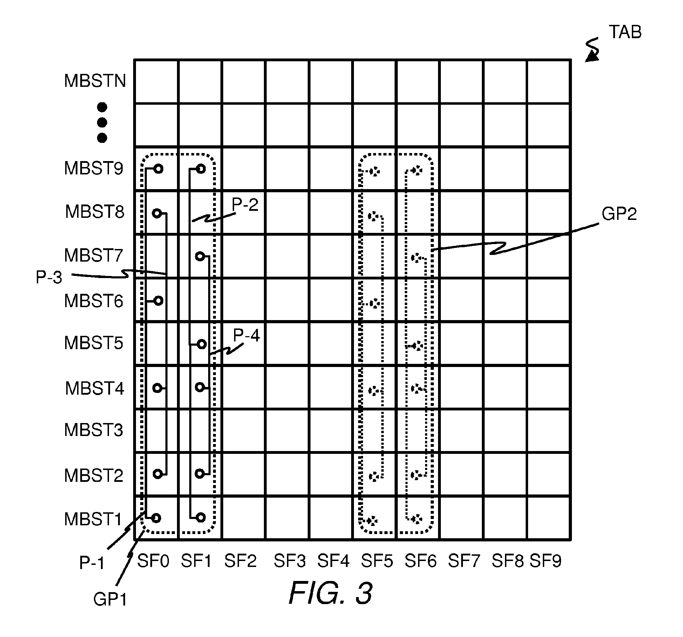

By a further step S3-NN the network node NN-CR determines at least one radio resource restriction for at least two of the macro base station transmitter apparatuses MBST1, ..., MBST9 based on the at least one first indication and the at least one second indication. Such determination is described in the following with respect to Figure 3 in more detail.

Figure 3 shows a table TAB with rows for a predefined number $N$ of macro base station transmitter apparatuses MBST1, MBST2, ..., MBSTN of the first sub-area AREA1 and with columns for a predefined number $K$ of radio resources SF0, SF1, ... SFK. The radio resources are time resources and are exemplarily ten sub-frames SF0, SF1, ... SF9 of a radio frame used in LTE which means $K = 10$. Each of the sub-frames SF0, SF1, ... SF9 has a time duration of 1 ms and the radio frame has a time duration of 10 ms. Alternatively, the radio resources may be frequency resources such as OFDM subcarriers. A person skilled in the art may easily adopt the embodiments to a usage of frequency resources instead of time resources.

The Figure 3 further shows a first group GP1 of radio resource restrictions for a first set P-1 of two or more macro base station transmitter apparatuses, for a second set P-2 of two or more macro base station transmitter apparatuses, for a third set P-3 of two or more macro base station transmitter apparatuses and for a fourth set P-4 of two or more macro base station transmitter apparatuses. The first group GP1 of radio resource restrictions may be obtained for example by following allocation algorithm or sorting method:

In a first sub-step S3-1-NN, the first set P-1 is determined, which should or must apply the at least one radio resource restriction with respect to the first pico base station PBS1. Therefore, the network node NN-CR may collect all worst PMIs which are received with respect to the first pico base station PBS1. Based for example on a knowledge of distances of antenna systems of the macro base station transmitter apparatuses MBST1, ..., MBST9 to the first pico base station PBS1 the network node NN-CR sorts all the received worst PMIs to a first sequence of first worst PMIs in such a way, that a worst PMI for a shortest distance is at a first position and a further worst PMI for a second shortest distance is at a second position and so on until a worst PMI for a longest distance is at a last position.

Alternatively, in addition to the worst PMIs also signal quality values such as SINR values or signal strength values such as RSRP (RSRP = reference signal received power) may be transmitted to the network node NN-CR from the mobile stations MS1, MS2, MS6, MS7 preferably in the FDD transmission mode or sounding signal strength values from the macro base stations preferably in the TDD transmission mode. In such a case the knowledge of the distances of antenna systems of the macro base station transmitter apparatuses MBST1, ..., MBST9 to the first pico base station PBS1 is not required and the signal quality values can be used for sorting all the received worst PMIs to the first sequence of the first worst PMIs. For example a worst PMI with a highest signal strength value may be placed at a first position and a further worst PMI with a second highest signal strength value may be placed at a second position and so on until a worst PMI with a lowest signal strength value may be placed at a last position.

For L = 3, first worst PMIs will be selected from the beginning of the first sequence of the first worst PMIs until first worst PMIs from three macro base station transmitter apparatuses have been found. The radiation beams which belong to the first worst PMIs and the corresponding macro base station transmitter apparatuses are determined for the first set P-1. With respect to the first pico base station PBS1, radiation beams RB1-4, RB1-5, RB6-5, RB9-1 and corresponding macro base station transmitter apparatuses MBST1, MBST6, MBST9 are determined for the first set P-1 (see also Figure 3).

By a further sub-step S3-2-NN, at least one radio resource restriction is chosen and allocated to at least one radio resource segment of the predefined number K of radio resources SF0, SF1, ... SFK. The at least one radio resource restriction is one radio resource element or are several radio resource elements which should be used for blanking radiation beams which are transmitted from the macro base station transmitter apparatuses. In a first alternative only a single radio resource element may be chosen. With respect to the example shown by Figure 3 the first set P-1 is allocated to subframe SF0.

In a next step S4-NN, the network node NN-CR transmits first information of the at least one radio resource restriction to be applied at the first macro base station transmitter apparatus MBST1 and at least second information of the at least one radio resource restriction to be applied at the at least one second macro base station transmitter apparatus MBST2, ..., MBST9. With respect to the example shown in Figure 1 and Figure 3, the network node NN-CR transmits the first information to the first macro base station, second information to the second macro base station and third information to the third macro base station.

The first information and the at least second information each comprises information of at least one radio resource and information of at least one radiation beam to be blanked or to be avoided or to be transmitted with reduced transmission power for the at least one radio resource by one of the macro base station transmitter apparatuses MBST1, ..., MBST9. Preferably, the at least one radio resource is a time resource as shown in Figure 3 or a frequency resource. Further preferred the information of the at least one radiation beam is at least one PMI. With respect to the above described example, the first information contains first indications for subframe SF0 and for radiation beams RB1-4, RB1-5, the second information contains second indications for subframe SF0 and for radiation beam RB6-5 and the third information contains third indications for subframe SF0 and for radiation beam RB9-1.

Next step after the step S4-NN may be again the step S2-NN.

By a further step S5-NN which may be executed in parallel to the step S2-NN, the network node NN-CR obtains at least one further first indication indicating interference at at least one further coverage area (e.g. the second pico radio cell PC2) of at least one further pico base station (e.g. the second pico base station PBS2) of the heterogeneous radio communication network RAN and at least one further second indication indicating further interference at the at least one further coverage area (e.g. the second pico radio cell PC2). Thereby, the interference at the at least one further coverage area is generated by at least one further first radiation beam (e.g. by the radiation beam RB1-1) of one (e.g. the first macro base station transmitter apparatus MBST1) of the macro base station transmitter apparatuses MBST1, ..., MBST9. The further interference at the at least one further coverage area is generated by at least one further second radiation beam (e.g. by radiation beams RB9-1, RB9-2) of a further one (e.g. the ninth macro base station transmitter apparatus MBST9) of the macro base station transmitter apparatuses MBST1, .... MBST9.

For obtaining the at least one further first indication and the at least one further second indication same alternatives may be applied as described with respect to the step S2-NN.

In a next step S6-NN, at least one further radio resource restriction for the first macro base station transmitter apparatus (e.g. the first macro base station transmitter apparatus MBST1) and for the at least one second macro base station transmitter apparatus (e.g. the ninth macro base station transmitter apparatus MBST9) are determined based on the at least one further first indication and the at least one further second indication. The at least one further radio resource restriction may be adapted to restrict at least one further first radiation beam transmission from the one of macro base station transmitter apparatuses MBST1, ..., MBST9 and to restrict at least one further second radiation beam transmission from the further one of the macro base station transmitter apparatuses MBST1, ..., MBST9.

Details of the step S6-NN are explained in the following with respect to Figure 2 and Figure 3. In a first sub-step S6-1-NN, the set P-2 is determined for applying the at least one further radio resource restriction with respect to the second pico base station PBS2. Therefore, the network node NN-CR may collect all worst PMIs which are received with respect to the second pico base station PBS2. These worst PMIs are sorted to a second sequence of second worst PMIs for example by one of the alternatives as described with respect to the sub-step S3-1-NN.

For $L = 3$ second worst PMIs will be selected from the beginning of the second sequence of the second worst PMIs until second worst PMIs from three macro base station transmitter apparatuses have been found. The radiation beams which belong to the second worst PMIs and the corresponding macro base station transmitter apparatuses are determined for the second set P-2. With respect to the second pico base station PBS2, radiation beams RB1-1, RB9-1, RB9-2 and radiation beams provided by the fifth macro base station transmitter apparatus MBST5 (not shown for simplification) and corresponding macro base station transmitter apparatuses MBST1, MBST5, MBST9 are determined for the second set P-2 (see also Figure 3).

By a further sub-step S6-2-NN, the network node NN-CR verifies, whether one of the macro base station transmitter apparatuses MBST1, MBST5, MBST9, which belong to the second set P-2 also belongs to one of the macro base station transmitter apparatuses MBST1, MBST6, MBST9, which belong to the first set P-1. With respect to example given by Figure 1 and Figure 3, the first macro base station transmitter apparatus MBST1 and the ninth macro base station transmitter apparatus MBST9 belong to both the first set P-1 and the second set P-2.

In a next sub-step S6-3-NN, when none macro base station transmitter apparatus of the second set P-2 belongs to the first set P-1, the at least one further radio resource restriction is determined for and allocated to the same radio resource segment. This is not the case with respect to the given example.

Else in a further sub-step S6-4-NN, the at least one further radio resource restriction is allocated to a second radio resource segment SF1 of the predefined group of radio resources. This is the case with respect to the given example. Preferably, the second radio resource segment SF1 is a radio resource segment which is next or adjacent to the radio resource segment SF0 for which a radio restriction has been determined with respect to the first set P-1.

The sub-steps S6-1-NN to S6-4-NN are repeated for a predefined number of pico base stations of the heterogeneous radio communication network RAN. With respect to Figure 3 a radio restriction is determined for the first subframe SF0 for the third set P-3 with respect to a third pico base station (not shown in Figure 1 for simplification) and a radio resource restriction is determined for the second subframe SF1 for the fourth set P-4 with respect to a fourth pico base station (also not shown in Figure 1 for simplification).

Preferably, the steps S3-NN and S6-NN coordinate simultaneously radio resource restrictions for radiation beam transmissions from the macro base station transmitter apparatuses MBST1, ..., MBST9 with respect to the coverage areas PC1, PC2 of the pico base stations PBS1, PBS2. This allows switching off or reduce interference from two or more of the macro base station transmitter apparatuses MBST1, ..., MBST9 at a same time for the coverage areas PC1, PC2 of the pico base stations PBS1, PBS2. Thereby, not only interference of radio beam transmissions from a single macro base station transmitter apparatus MBST1, ..., MBST9 can be avoided for a short time period (e.g. a single subframe SF0, ..., SF9) or for a frequency subcarrier but also interference of radio beam transmission from at least one further macro base station transmitter apparatus MBST1, ..., MBST9 for being able to increase a data rate for the mobile stations which are served by the pico base stations PBS1, PBS2.

The worst PMIs may be collected and reported to the network node NN-CR independent from a location of one of the mobile stations MS1, MS2, MS6, MS7 within a pico radio cell. But radio resource restrictions may be preferably only determined, when the mobile stations MS1, MS2, MS6, MS7 are located near a cell border of the pico radio cells PC1, PC2 because the interference from the radiation beams of the macro base station apparatuses MBST1, ... MBST9 may be only disturbing, when the mobile stations MS1, MS2, MS6, MS7 are located near a cell border of the pico radio cells PC1, PC2 and not when the mobile stations MS1, MS2, MS6, MS7 are located at a cell center of the pico radio cells PC1, PC2.

By a next step S8-NN, the network node NN-CR transmits further first information of the at least one further radio resource restriction to be applied at the one of the macro base station transmitter apparatuses MBST1, ..., MBST9 and at least second further information of the at least one further radio resource restriction to be applied at the further one of the macro base station transmitter apparatuses MBST1, ..., MBST9. With respect to the example shown in Figure 1 and Figure 3, the network node NN-CR transmits the further first information to the first macro base station, further second information to the second macro base station and further third information to the third macro base station to decrease interference at the second pico radio cell PC2 of the second pico base station PBS2. The further first information, the further second information and the further third information may have a similar information content as described above with respect to the step S4-NN for the first information, the second information and the third information.

Regarding the above described example of the second set P-2, the further first information contains further first indications for subframe SF1 and for radiation beam RB1-1 of the first macro base station transmitter apparatus MBST1, the further second information contains further second indications for the subframe SF1 and for interfering radiation beams (not shown in Figure 1 for simplification) of the fifth macro base station transmitter apparatus MBST5 and the further third information contains further third indications for the subframe SF1 and for radiation beams RB9-1, RB9-2 of the ninth macro base station transmitter apparatus MBST9.

Next step after the step S8-NN may be again the step S5-NN.

The method MET-NN may be restarted periodically with a time period of 100 ms or several seconds depending on how quickly a load situation in the macro radio cells and/or in the pico radio cells is changing or may be restarted by a specific trigger such as when severely changed load situations are detected in one of the macro radio cells and/or the pico radio cells or when new macro base stations and/or pico base stations are switched on when existing macro base stations and/or pico base stations are switched off or are reconfigured.

Alternatively, not only a single radio resource restriction is chosen for the sets P-1, ..., P-4 by allocating each of the sets P-1, ..., P-4 to a single radio resource segment SF0, SF1 but also at least one further radio resource restriction may be applied for the sets P-1, ..., P-4. Therefore, the steps S3-2-NN, S6-3-NN, and S6-4-NN may allocate first radio resource restrictions in a first part of the predefined group of radio resources and allocates same said radio resource restrictions in at least one second part of the predefined group of radio resources. This is indicated in Figure 3 by a second group GP2 of radio resource restrictions. The radio resource restrictions which have been allocated to the subframes SF0 and SF1 may be allocated for example a second time to the subframes SF5 and SF6 of the same radio frame.

Theoretically the allocation algorithm can be described in a following way:

For each pico radio cell PC1, PC2 a dependency on $L$ macro radio cells with appropriate radio resource restriction setting may be represented by the sets P-1, P-2, P-3, P-4, which are shown in Figure 3 as combs which have three teeth each with varied distances between the teeth. Each of the combs connects a number of $L$ rows and thereby allocates corresponding macro base station transmitter apparatuses $M_i$ with $i = 1, ...,N$ ($N$ is the number of macro base station transmitter apparatuses within the subarea AREA1) to each of the combs $P_n$ with $n = 1, ..., M$ and with $M$ being a number of pico base stations PBS1, PBS2 within the first sub-area AREA1. For $L = 3$ each of the combs $P_n$ can be described as a

quadruple $Q_n = (M_i, M_j, M_k, P_n)$. Thereby, it is assumed that in each of the macro radio cells M-1, ..., M-9 a single pico base station is located. The macro base station transmitter apparatuses $M_i$ define the rows in the table TAB of Figure 3. The allocation algorithm starts with a first time slot $SF_0$, which is subframe SF0. A condition is defined, that two combs $P_n$ cannot have teeth in a same row for a same time slot which means that two combs $P_n$ are not allowed to overlap. A further condition is defined, that combs $P_n$ are allocated to a same time slot as long as the combs $P_n$ do not overlap. An even further condition is defined, that each of the combs $P_n$ shall be allocated to a time slot with a smallest index.

Based on these conditions, a first comb $P_1$ may be allocated to the first time slot $SF_0$. A second comb $P_2$ can be allocated to the first time slot $SF_0$, as long as the second comb $P_2$ does not overlap with the already allocated first comb $P_1$. When overlapping occurs for the second comb $P_2$ (see Figure 3), then the second comb $P_2$ is allocated to a second time slot $SF_1$, which is subframe SF1. A same kind of sorting and allocation is applied for all further combs $P_n$ with $n = 3, ..., M$. Thereby, time slots up to a time slot $SF_\mu$ may be filled with the combs $P_n$ with $n = 1, ..., M$.

Using this kind of allocation algorithm some fields (e.g. represented by the seventh macro base station transmitter apparatus MBST7 and the subframe SF0) of the table TAB are not filled with teeth of the combs $P_n$ with $n = 1, ..., M$. Therefore in practice it is $\mu > L - 1$. For the heterogeneous radio access network RAN being based on LTE and for $L = 3$ all radio resource restrictions may fill up time slots up to time slot $SF_4$ or time slot $SF_5$ (such a filling is not shown in Figure 3 for simplification). Such a time slot which has one or several radio resource restrictions is also known as a subframe in 3GPP LTE radio access networks.

Remaining time slots $SF_5, ...,SF_9$ or $SF_6, ..., SF_9$ are not imposed by radio resource restrictions. These remaining time slots can be applied unrestricted by the macro base station transmitter apparatuses MBST1, ..., MBST9 for scheduling mobile stations MS3, MS4, MS5, MS8 which are served by one of the macro base station transmitter apparatuses MBST1, ..., MBST9. This means, that the macro base station transmitter apparatuses MBST1, ..., MBST9 operate alternatively in a first phase with radio resource restrictions and a second phase without any radio resource restrictions.

If it is $\mu \leq \dfrac{K}{2}$ the radio resource restrictions ($K = 10$ in LTE) may be doubled within a radio frame. This is indicated by the second group GP2 of radio resource restrictions as indicated by dotted lines in Figure 3.

The embodiments are not limited to the above described allocation algorithm or sorting method. Alternatively, further allocation algorithms such as more sophisticated packing algorithms known to skilled persons in the art may be applied.

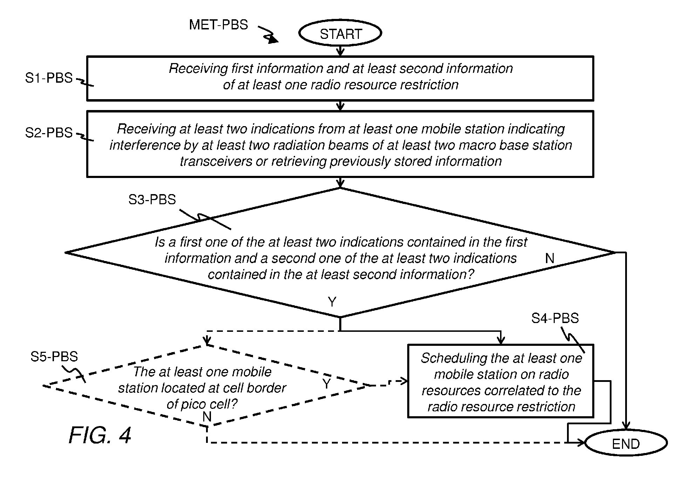

Figure 4 shows schematically a flow diagram of a method MET-PBS for a pico base station for interference coordination in the heterogeneous radio access network RAN and for scheduling mobile stations MS1, MS2, MS6, MS7 based on radio resource restrictions which are applied at the surrounding macro base station transmitter apparatuses MBST1, ..., MBST9. The pico base station may be for example the first pico base station PBS1 or the second pico base station PBS2. The method MET-PBS may be preferably applied to mobile stations which are served by the pico base station and which are located at a cell border of a corresponding pico radio cell (see description for step S5-PBS below). Alternatively, the method MET-PBS may be applied to all mobile stations which are served by the pico base station.

In a first step S1-PBS, the pico base station receives in a pro-active way the first information of the at least one radio resource restriction and the at least second information of the at least one radio resource restriction. The first information and the at least second information may be for example directly received from the network node NN-CR.

Alternatively, the first information may be received from a first one of at least two of the macro base station transmitter apparatuses MBST1, ..., MBST9 which applies the at least one radio resource restriction according to the first information and the at least second information may be received from a second one of the at least two of the macro base station transmitter apparatuses MBST1, ..., MBST9 which applies the at least one radio resource restriction according to the at least second information. This means with respect to 3GPP LTE that X2 messages may be applied for transmitting the first information and the at least second information from the macro base stations to the pico base stations PBS1, PBS2.

As already mentioned above, the first information and the at least second information each contains information of at least one radio resource and information of at least one radiation beam to be blanked or to be avoided or to be transmitted with reduced transmission power for the at least one radio resource by one of the macro base station transmitter apparatuses MBST1, ..., MBST9. With respect to the above described example, the first information contains first indications for subframe SF0 and for radiation beams RB1-4, RB1-5, the second information contains second indications for subframe SF0 and for radiation beam RB6-5 and the third information contains third indications for subframe SF0 and for radiation beam RB9-1.

By a further step S2-PBS, the pico base station PBS1, PBS2 receives the at least one first indication and the at least one second indication from at least one mobile station being served by the pico base station. In case of the first pico base station PBS1 the at least one first indication and the at least one second indication are received from one or both of the mobile stations MS1, MS2. This means that both mobile stations MS1, MS2 may report both the at least one first indication and the at least one second indication to the pico base station or one of the mobile stations MS1, MS2 report one of the at least one first indication and the at least one second indication to the pico base station. Similarly in case of the second pico base station PBS2 the at least one first indication and the at least one second indication are received from one or both of the mobile stations MS6, MS7. The at least one first indication and the at least one second indication may be for example worst PMIs as already described above with respect to Figure 1.

Alternatively, by the step S2-PBS the pico base station PBS1, PBS2 may retrieve previously stored information of such indications, which may have been consolidated for example by averaging the indications according to a frequency of their reporting from the mobile stations MS1, MS2, MS6 and MS7.

In a next step S3-PBS, the pico base station verifies, whether the received at least one first indication or a previously received and stored at least one first indication is contained in the first information and whether the received at least one second indication or a previously received and stored at least one second indication is contained in the at least second information.

By a further step S4-PBS, when the received at least one first indication or a previously received and stored at least one first indication is contained in the first information and when the received at least one second indication or a previously received and stored at least one second indication is contained in the at least second information, the pico base station schedules at least one mobile station (e.g. mobile stations MS1, MS2 in case of the first pico base station PBS1) which is currently served by the pico base station by using at least one radio resource which correlates with the at least one radio resource restriction. Correlation means that the mobile stations MS1, MS2 are scheduled by those radio resources for which the radiation beam transmissions are restricted.

Else, when the received at least one first indication or a previously received and stored at least one first indication is not contained in the first information or when the received at least one second indication or a previously received and stored at least one second indication is not contained in the at least second information, the method MET-PBS may end and may be restarted, when either new first information is received or new at least second information is received or a new at least one first indication is received and a new at least one second indication is received.

In a preferred embodiment, the method MET-PBS may further contain step S5-PBS. By the step S5-PBS, the pico base station verifies based on the at least first indication and the at least second indication, whether the at least one mobile station is located at a cell border of the pico radio cell of the pico base station. The first pico base station PBS1 assumes for example that the mobile stations MS1, MS2 are located at the cell border of the first pico radio cell PC1, when the signal quality values reported from the mobile stations MS1, MS2 are below a predefined threshold or when a path loss between the mobile station MS1, MS2 and the first pico base station PBS1 is above a predefined path loss value.

When the at least one mobile station is located at the cell border of the pico radio cell of the pico base station a next step after the step S5-PBS is the step S4-PBS and the at least one mobile station is scheduled on the radio resources which are correlated to the radio resource restriction. Else when the at least one mobile station is not located at the cell border of the pico radio cell of the pico base station, the method MET-PBS may end and may be restarted, when either the new first information is received or the new at least second information is received or the new at least one first indication is received and the new at least one second indication is received.

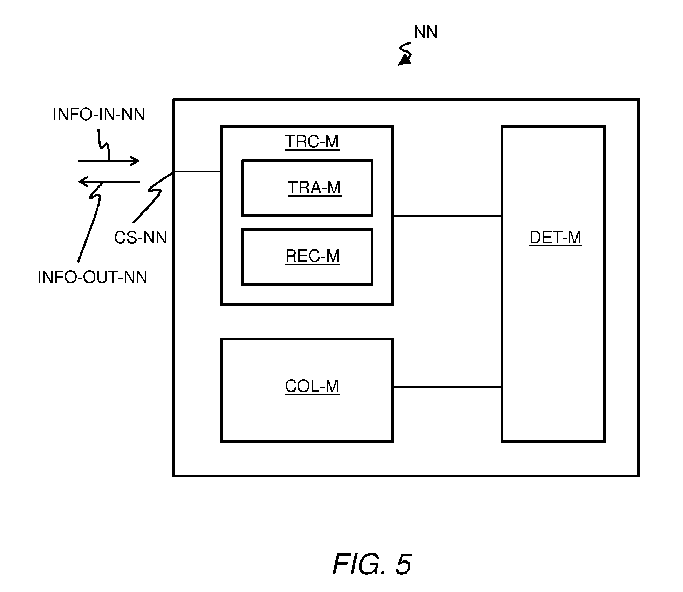

Figure 5 shows schematically an exemplarily block diagram of the network node NN. The network node NN may be for example the network node NN-CR as shown in Figure 1 which is in addition to the macro base stations a further network node of the heterogeneous radio communication network RAN. Alternatively, the network node NN may be one of the macro base stations of the heterogeneous radio communication network RAN.

The network node NN contains a connection socket CS-NN for the data links DL1, ..., DL6 and a transceiver module TRC-M for receiving input information INFO-IN-NN and for transmitting output information INFO-OUT-NN. The transceiver module TRC-M contains a transmitter module TRA-M and a receiver module REC-M. The transmitter module TRA-M may contain typical transmitter components, such as filter or filter circuitry, an amplifier such as a Power Amplifier (PA), conversion circuitry for converting a base band signal to a Radio Frequency (RF) signal, a digital/analogue converter, or signal processing capability such as DSP (DSP = Digital signal processor). The receiver module REC-M may correspond to one or more receiver devices, one or more receiver units, or any means for receiving. The radio module R-MOD may therefore comprise typical receiver components, such as filter or filter circuitry, an amplifier such as an LNA (LNA = Low Noise Amplifier), conversion circuitry for converting an RF signal to a base band signal, an analog/digital converter, or signal processing capability such as a DSP.

The input information INFO-IN-NN may be for example the at least one first indication indicating interference at a coverage area of one of the pico base stations PBS1, PBS2 and the at least one second indication indicating further interference at the coverage area of the one of the pico base stations PBS1, PBS2. The output information INFO-OUT-NN may be for example the first information of the at least one radio resource restriction to be applied at the first macro base station transmitter apparatus MBST1 and the at least second information of the at least one radio resource restriction to be applied at the at least one second macro base station transmitter apparatus MBST2, ..., MBST9.

The network node NN-CR further contains a collector module COL-M which is configured to collect the indications which indicate interference at one or several of the coverage areas PC1, PC2 of the pico base stations PBS1, PBS2.

The network node NN-CR even further contains a determination module DET-M which is configured to determine based on the indications the radio resource restrictions.

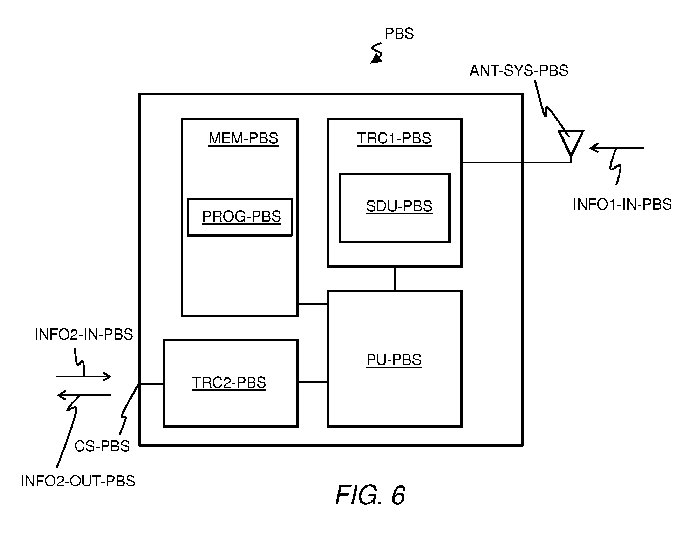

Figure 6 shows schematically an exemplarily block diagram of a pico base station PBS. The pico base station PBS may be for example the first pico base station PBS1 or the second pico base station PBS2 which are shown in Figure 1.

The pico base station PBS contains an antenna system ANT-SYS-PBS and a first transceiver TRC1-PBS for receiving first input information INFO1-IN-PBS from a mobile station via the antenna system ANT-SYS-PBS. The first input information INFO1-IN-PBS may be for example the at least one first indication and the at least one second indication from the mobile station being served by the pico base station.

The pico base station PBS further contains a connection socket CS-PBS for one of the data links DL4, DL5 and a second transceiver TRC2-PBS for receiving second input information INFO2-IN-PBS and for transmitting second output information INFO2-OUT-PBS. The second input information INFO2-IN-PBS may be for example the first information of the at least one radio resource restriction and the at least second information of the at least one radio resource restriction. The second output information INFO2-OUT-PBS may be for example the at least one first indication indicating interference at a coverage area of the pico base station PBS and the at least one second indication indicating further interference at the coverage area of the pico base station PBS. Alternatively, the second input information INFO2-IN-PBS may be received via the first transceiver TRC1-PBS and the second output information INFO2-OUT-PBS may be transmitted via the first transceiver TRC1-PBS, when the pico base station PBS may be for example connected to one of the macro base stations via a wireless link. In such a case, the connection socket CS-PBS and the second transceiver TRC2-PBS are not required.

The first transceiver TRC1-PBS contains a scheduling unit, scheduler module or scheduler SDU-PBS for scheduling mobile stations based on the radio resource restrictions which have been determined by the network node NN-CR, when the received indications or previously stored indications correlate to the information of the at least one first radio resource restriction or when one of the mobile stations MS1, MS2, MS6, MS7 is considered to be at a cell border of one of the coverage areas PC1, PC2 based on pathloss measurements which are known to skilled persons in the art and which are therefore not described in further detail.

The pico base station PBS even further contains a memory MEM-PBS for storing a computer program PROG-PBS which contains commands for executing the method MET-PBS.

The pico base station PBS further contains a processing unit PU-PBS for executing the computer program PROG-PBS or at least parts of the computer program PROG-PBS. The processing unit PU-PBS and the computer program PROG-PBS are adapted for example to verify, whether the received at least one first indication is contained in the one of the first information and the at least second information and the received at least one second indication is contained in the further one of the first information and the at least second information.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for performing a certain function" shall be understood as functional blocks comprising circuitry that is adapted for performing the certain function, respectively. Hence, a "means for something" may as well be understood as a "means being adapted or suited for something". A means being adapted for performing a certain function does, hence, not imply that such means necessarily is performing said function (at a given time instant).

Functions of various elements shown in the figures, including any functional blocks may be provided through the use of dedicated hardware, as e.g. a processor, as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, DSP hardware, network processor, ASIC, FPGA, read only memory (ROM) for storing software, random access memory (RAM), and non-volatile storage. Other hardware, conventional and/or custom, may also be included.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the detailed description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that the methods MET-NN, MET-PBS disclosed in the specification or in the claims may be implemented by a device having means for performing each of the respective steps of these methods. Preferably, a computer program product may contain computer-executable instructions for performing the methods MET-NN, MET-PBS, when the computer program product is executed on a programmable hardware device such as a DSP, an ASIC or an FPGA. Preferably, a digital data storage device may encode a machine-executable program of instructions to perform one of the methods MET-NN, MET-PBS.

Further, it is to be understood that the disclosure of multiple steps or functions disclosed in the specification or claims may not be construed as to be within the specific order. Therefore, the disclosure of multiple steps or functions will not limit these to a particular order unless such steps or functions are not interchangeable for technical reasons. Furthermore, in some embodiments a single step may include or may be broken into multiple sub steps. Such sub steps may be included and part of the disclosure of this single step unless explicitly excluded.

**Claims**

1. A method (MET-NN) for a network node (NN, NN-CR, MBST1, ..., MBST9) for interference coordination in a heterogeneous radio communication network (RAN) comprising:

   - collecting (S2-NN) at least two indications indicating interference at a first coverage area (PC1) of a first pico base station (PBS1) of said heterogeneous radio communication network (RAN) by at least two radiation beams (RB1-4, RB1-5, RB6-5, RB9-1) of a first set (P-1) of at least two macro base station transmitter apparatuses (MBST1, MBST6, MBST9) of macro base station transmitter apparatuses (MBST1, ..., MBST9) of said heterogeneous radio communication network (RAN),
- determining (S3-NN) based on said at least two indications at least one first radio resource restriction adapted to restrict radiation beam transmissions via said at least two radiation beams (RB1-4, RB1-5, RB6-5, RB9-1) towards said first coverage area (PC1), and
- transmitting (S4-NN) information of said at least one first radio resource restriction to said first set (P-1).

2.  Method (MET-NN) according to claim 1, wherein said information comprises with respect to a first one (MBST1) of said at least two macro base station transmitter apparatuses (MBST1, MBST6, MBST9) of said first set (P-1) information of at least one radio resource (SF0, SF1, SF2, ..., SF9) and first information of at least one radiation beam (RB1-4, RB1-5) to be blanked, avoided or power reduced for said at least one radio resource (SF0, SF1, SF2, ..., SF9) at said first one of said at least two macro base station transmitter apparatuses (MBST1, MBST6, MBST9) and further comprises with respect to at least one second (MBST6, MBST9) of said at least two macro base station transmitter apparatuses (MBST1, MBST6, MBST9) of said first set (P-1) said information of said at least one radio resource (SF0, SF1, SF2, ..., SF9) and at least second information of at least one further radiation beam (RB6-5, RB9-1) to be blanked, avoided or power reduced for said at least one radio resource (SF0, SF1, SF2, ..., SF9) at said at least one second (MBST6, MBST9) of said at least two macro base station transmitter apparatuses (MBST1, MBST6, MBST9).

3.  Method (MET-NN) according to claim 2, wherein said at least one radio resource (SF0, SF1, SF2, ..., SF9) is a time resource or a frequency resource, wherein said first information comprises at least one first precoding matrix indicator and wherein said at least second information comprises at least one second precoding matrix indicator.

4.  Method (MET-NN) according to any of the preceding claims, wherein said method (MET-NN) further comprises predefining (S1-NN) a maximum number of macro base station transmitter apparatuses of said first set (P-1) for which radio resource restrictions are going to be determined with respect to said first pico base station (PBS1).

5.  Method (MET-NN) according to any of the preceding claims, wherein said collecting (S2-NN) of said at least two indications comprises at least one of the following:

    - receiving at least one of said at least two indications from at least one mobile station (MS1, MS2) being served by said first pico base station (PBS1), preferably when said heterogeneous radio communication network (RAN) operates in a frequency division duplex transmission mode,
    - receiving at least one of said at least two indications from a macro base station transceiver apparatus belonging to said first set (P-1), preferably when said heterogeneous radio communication network (RAN) operates in a time division duplex transmission mode and uplink transmissions from mobile stations (MS1, ..., MS8) can be exploited as indications for said interference being generated by said at least two radiation beams (RB1-4, RB1-5, RB6-5, RB9-1),
    - collecting at least one of said at least two indications from a database (NN-DB) of said heterogeneous radio communication network (RAN) and wherein said database (NN-DB) comprises a mapping between locations of coverage areas of radiation beams (RB1-4, RB1-5, RB6-5, RB9-1, RB9-2) of said macro base station transmitter apparatuses (MBST1, ..., MBST9) and locations of coverage areas (PC1, PC2) of pico base stations (PBS1, PBS2) overlapping with said locations of said coverage areas of said radiation beams (RB1-4, RB1-5, RB6-5, RB9-1, RB9-2).

6.  Method (MET-NN) according to any of the preceding claims, wherein said method (MET-NN) further comprises:

    - collecting (S5-NN) at least two further indications indicating interference at at least one second coverage area (PC2) of at least one second pico base station (PBS2) of said heterogeneous radio communication network (RAN) by at least two further radiation beams (RB1-1, RB9-1, RB9-2) of at least one second set (P-2, P-3, P-4) of at least two macro base station transmitter apparatuses (MBST1, MBST9) of said macro base station transmitter apparatuses (MBST1, ..., MBST9) of said heterogeneous radio communication network (RAN),
    - determining (S6-NN) based on said at least two further indications at least one second radio resource restriction adapted to restrict further radiation beam transmissions via said at least two further radiation beams (RB1-1, RB9-1, RB9-2) towards said at least one second coverage area (PC2), and
    - transmitting (S8-NN) further information of said at least one second radio resource restriction to said at least one second set (P-2, P-3, P-4).

7.  Method (MET-NN) according to claim 6, wherein said determining (S3-NN) of said at least one first radio resource restriction and said determining (S6-NN) of said at least one second radio resource restriction coordinates simultaneously radio resource restrictions at said first set (P-1) with respect to said first pico base station (PBS1) and at said at least one second set (P-2, P-3, P-4) with respect to said at least one second pico base station (PBS2).

8.  Method (MET-NN) according to claim 6 or claim 7, wherein said determining (S3-NN) of said at least one first radio resource restriction and said determining (S6-NN) of said at least one second radio resource restriction allocates radio resource restrictions in such a way that for each macro base station transmitter apparatus of said first set (P-1) and of said at least one second set (P-2, P-3, P-4) only a single radiation beam restriction corresponding to a single indication for a single coverage area is allocated.

9.  Method (MET-NN) according to claim 8, wherein said determining (S3-NN) of said at least one first radio resource restriction and said determining (S6-NN) of said at least one second radio resource restriction comprises:

    - determining (S3-1-NN) said first set (P-1),
    - allocating (S3-2-NN) said at least one first radio resource restriction to a radio resource segment (SF0) of a predefined group of radio resources,
    - determining (S6-1-NN) said at least one second set (P-2, P-3, P-4),
    - allocating (S6-3-NN) said at least one second radio resource restriction to said radio resource segment (SF0), when none macro base station transmitter apparatus of said at least second set (P-2, P-3, P-4) belongs to said first set (P-1) and else allocating (S6-4-NN) said at least one second radio resource restriction to a second radio resource segment (SF1) of said predefined group of radio resources for a predefined number of pico base stations of said heterogeneous radio communication network (RAN).

10. Method (MET-NN) according to claim 9, wherein said determining (S3-NN) of said at least one first radio resource restriction and said determining (S6-NN) of said at least one second radio resource restriction determines radio resource restrictions by avoiding overlapping restrictions in each macro base station transmitter apparatus for radio resources of said predefined group of radio resources.

11. A network node (NN, NN-CR, MBST1, ..., MBST9) for interference coordination in a heterogeneous radio communication network (RAN) comprising:

    - a collector module (COL-M) configured to collect at least two indications indicating interference at a first coverage area (PC1) of a first pico base station (PBS1) of said heterogeneous radio communication network (RAN) by at least two radiation beams (RB1-4, RB1-5, RB6-5, RB9-1) of a first set (P-1) of at least two macro base station transmitter apparatuses (MBST1, MBST6, MBST9) of macro base station transmitter apparatuses (MBST1, ..., MBST9) of said heterogeneous radio communication network (RAN),
    - a determination module (DET-M) configured to determine based on said at least two indications at least one first radio resource restriction adapted to restrict radiation beam transmissions via said at least two radiation beams (RB1-4, RB1-5, RB6-5, RB9-1) towards said first coverage area (PC1), and
    - a transmitter module (TRA-M) configured to transmit information of said at least one first radio resource restriction to said first set (P-1).

12. Network node (NN) according to claim 11, wherein said network node (NN) is operable as one of said macro base station transmitter apparatuses (MBST1, ..., MBST9) of said heterogeneous radio communication network (RAN) or is operable as an additional network node (NN-CR) of said heterogeneous radio communication network (RAN).

13. Method (MET-PBS) for a pico base station (PBS1, PBS2) for interference coordination in a heterogeneous radio communication network (RAN) comprising:

    - receiving (S1-PBS) information of at least one radio resource restriction to be applied at a set (P-1, P-2, P-3, P-4) of at least two macro base station transmitter apparatuses (MBST1, MBST6, MBST9) of macro base station transmitter apparatuses (MBST1, ..., MBST9) of said heterogeneous radio communication network (RAN),
    - receiving (S2-PBS) from at least one mobile station (MS1, MS2, MS6, MS7) being served by said pico base station (PBS1, PBS2) at least two indications indicating interference by at least two radiation beams (RB1-4, RB1-5, RB6-5, RB9-1, RB9-2) of macro base station transmitter apparatuses (MBST1, ..., MBST9) of said heterogeneous radio communication network (RAN) at a coverage area (PC1, PC2) of said pico base station (PBS1, PBS2), and

- scheduling (S4-PBS) said at least one mobile station (MS1, MS2, MS6, MS7) using at least one radio resource correlated to said at least one radio resource restriction, when said at least two indications or previously stored indications correlate to said information of said at least one first radio resource restriction.

14. Method (MET-PBS) according to claim 13, wherein said method (MET-PBS) further comprises:

- verifying (S5-PBS) based on path loss measurements , whether said at least one mobile station (MS1, MS2, MS6, MS7) is located at a cell border of said pico base station (PBS1, PBS2), and
- scheduling (S4-PBS) said at least one mobile station (MS1, MS2, MS6, MS7) using said at least one radio resource of said at least one radio resource restriction, when said at least one mobile station (MS1, MS2, MS6, MS7) is located at said cell border.

15. Pico base station (PBS1, PBS2) for interference coordination in a heterogeneous radio communication network (RAN) comprising:

- at least one receiver module (TRC1-PBS, TRC2-PBS) configured to receive information of at least one radio resource restriction to be applied at a set (P-1, P-2, P-3, P-4) of at least two macro base station transmitter apparatuses (MBST1, MBST6, MBST9) of macro base station transmitter apparatuses (MBST1, ..., MBST9) of said heterogeneous radio communication network (RAN) for restricting radiation beam transmissions via at least two first radiation beams (RB1-4, RB1-5, RB6-5, RB9-1) towards a coverage area (PC1, PC2) of said pico base station (PBS1, PBS2) and to receive from at least one mobile station (MS1, MS2, MS6, MS7) being served by said pico base station (PBS1, PBS2) at least two indications indicating interference by at least two second radiation beams (RB1-4, RB1-5, RB6-5, RB9-1, RB9-2) of macro base station transmitter apparatuses (MBST1, ..., MBST9) of said heterogeneous radio communication network (RAN) at said coverage area (PC1, PC2) of said pico base station (PBS1, PBS2), and
- a scheduler module (SDU-PBS) configured to schedule said at least one mobile station (MS1, MS2, MS6, MS7) using at least one radio resource correlated to said at least one radio resource restriction, when said at least two indications or previously stored indications correlate to said information of said at least one first radio resource restriction or when in case of correlation said at least one mobile station (MS1, MS2, MS6, MS7) is considered to be at a cell border of said coverage area (PC1, PC2) preferably based on path loss measurements.

**Amended claims in accordance with Rule 137(2) EPC.**

1. A method (MET-NN) for a network node (NN, NN-CR, MBST1, ..., MBST9) for interference coordination in a heterogeneous radio communication network (RAN) comprising:

- collecting (S2-NN) at least two indications indicating interference at a first coverage area (PC1) of a first pico base station (PBS1) of said heterogeneous radio communication network (RAN) by at least two radiation beams (RB1-4, RB1-5, RB6-5, RB9-1) of a first set (P-1) of at least two macro base station transmitter apparatuses (MBST1, MBST6, MBST9) of macro base station transmitter apparatuses (MBST1, ..., MBST9) of said heterogeneous radio communication network (RAN),
- collecting (S5-NN) at least two further indications indicating interference at at least one second coverage area (PC2) of at least one second pico base station (PBS2) of said heterogeneous radio communication network (RAN) by at least two further radiation beams (RB1-1, RB9-1, RB9-2) of at least one second set (P-2, P-3, P-4) of at least two macro base station transmitter apparatuses (MBST1, MBST9) of said macro base station transmitter apparatuses (MBST1, ..., MBST9) of said heterogeneous radio communication network (RAN),
- determining (S3-NN) based on said at least two indications at least one first radio resource restriction adapted to restrict radiation beam transmissions via said at least two radiation beams (RB1-4, RB1-5, RB6-5, RB9-1) towards said first coverage area (PC1),
- determining (S6-NN) based on said at least two further indications at least one second radio resource restriction adapted to restrict further radiation beam transmissions via said at least two further radiation beams (RB1-1, RB9-1, RB9-2) towards said at least one second coverage area (PC2),
- transmitting (S4-NN) information of said at least one first radio resource restriction to said first set (P-1), and
- transmitting (S8-NN) further information of said at least one second radio resource restriction to said at least one second set (P-2, P-3, P-4), wherein said determining (S3-NN) of said at least one first radio resource restriction and said determining (S6-NN) of said at least one second radio resource restriction is based on following conditions:

- a first condition that for each macro base station transmitter apparatus of said first set (P-1) and of said at least one second set (P-2, P-3, P-4) only a single radiation beam restriction is allocated in a same time slot for a single coverage area of said macro base station transmitter apparatuses (MBST1, ..., MBST9),
- a second condition that radiation beam restrictions are allocated to a same time slot as long as said first condition is fulfilled,
- a third condition that radiation beam restrictions are allocated to a time slot with a smallest index.

2. Method (MET-NN) according to claim 1, wherein said information comprises with respect to a first one (MBST1) of said at least two macro base station transmitter apparatuses (MBST1, MBST6, MBST9) of said first set (P-1) information of at least one radio resource (SF0, SF1, SF2, ..., SF9) and first information of at least one radiation beam (RB1-4, RB1-5) to be blanked, avoided or power reduced for said at least one radio resource (SF0, SF1, SF2, ..., SF9) at said first one of said at least two macro base station transmitter apparatuses (MBST1, MBST6, MBST9) and further comprises with respect to at least one second (MBST6, MBST9) of said at least two macro base station transmitter apparatuses (MBST1, MBST6, MBST9) of said first set (P-1) said information of said at least one radio resource (SF0, SF1, SF2, ..., SF9) and at least second information of at least one further radiation beam (RB6-5, RB9-1) to be blanked, avoided or power reduced for said at least one radio resource (SF0, SF1, SF2, ..., SF9) at said at least one second (MBST6, MBST9) of said at least two macro base station transmitter apparatuses (MBST1, MBST6, MBST9).

3. Method (MET-NN) according to claim 2, wherein said at least one radio resource (SF0, SF1, SF2, ..., SF9) is a time resource or a frequency resource, wherein said first information comprises at least one first precoding matrix indicator and wherein said at least second information comprises at least one second precoding matrix indicator.

4. Method (MET-NN) according to any of the preceding claims, wherein said method (MET-NN) further comprises predefining (S1-NN) a maximum number of macro base station transmitter apparatuses of said first set (P-1) for which radio resource restrictions are going to be determined with respect to said first pico base station (PBS1).

5. Method (MET-NN) according to any of the preceding claims, wherein said collecting (S2-NN) of said at least two indications comprises at least one of the following:

- receiving at least one of said at least two indications from at least one mobile station (MS1, MS2) being served by said first pico base station (PBS1), preferably when said heterogeneous radio communication network (RAN) operates in a frequency division duplex transmission mode,
- receiving at least one of said at least two indications from a macro base station transceiver apparatus belonging to said first set (P-1), preferably when said heterogeneous radio communication network (RAN) operates in a time division duplex transmission mode and uplink transmissions from mobile stations (MS1, ..., MS8) can be exploited as indications for said interference being generated by said at least two radiation beams (RB1-4, RB1-5, RB6-5, RB9-1),
- collecting at least one of said at least two indications from a database (NN-DB) of said heterogeneous radio communication network (RAN) and wherein said database (NN-DB) comprises a mapping between locations of coverage areas of radiation beams (RB1-4, RB1-5, RB6-5, RB9-1, RB9-2) of said macro base station transmitter apparatuses (MBST1, ..., MBST9) and locations of coverage areas (PC1, PC2) of pico base stations (PBS1, PBS2) overlapping with said locations of said coverage areas of said radiation beams (RB1-4, RB1-5, RB6-5, RB9-1, RB9-2).

6. Method (MET-NN) according to claim 1, wherein said determining (S3-NN) of said at least one first radio resource restriction and said determining (S6-NN) of said at least one second radio resource restriction coordinates simultaneously radio resource restrictions at said first set (P-1) with respect to said first pico base station (PBS1) and at said at least one second set (P-2, P-3, P-4) with respect to said at least one second pico base station (PBS2).

7. Method (MET-NN) according to claim 1, wherein said determining (S3-NN) of said at least one first radio resource restriction and said determining (S6-NN) of said at least one second radio resource restriction comprises:

- determining (S3-1-NN) said first set (P-1),
- allocating (S3-2-NN) said at least one first radio resource restriction to a radio resource segment (SFO) of a predefined group of radio resources,
- determining (S6-1-NN) said at least one second set (P-2, P-3, P-4),
- allocating (S6-3-NN) said at least one second radio resource restriction to said radio resource segment (SF0), when none macro base station transmitter apparatus of said at least second set (P-2, P-3, P-4) belongs to said first set (P-1) and else allocating (S6-4-NN) said at least one second radio resource restriction to a second radio resource segment (SF1) of said predefined group of radio resources for a predefined number of pico base stations of said heterogeneous radio communication network (RAN).

8. A network node (NN, NN-CR, MBST1, ..., MBST9) for interference coordination in a heterogeneous radio communication network (RAN) comprising:

- a collector module (COL-M) configured to collect at least two indications indicating interference at a first coverage area (PC1) of a first pico base station (PBS1) of said heterogeneous radio communication network (RAN) by at least two radiation beams (RB1-4, RB1-5, RB6-5, RB9-1) of a first set (P-1) of at least two macro base station transmitter apparatuses (MBST1, MBST6, MBST9) of macro base station transmitter apparatuses (MBST1, ..., MBST9) of said heterogeneous radio communication network (RAN) and to collect at least two further indications indicating interference at at least one second coverage area (PC2) of at least one second pico base station (PBS2) of said heterogeneous radio communication network (RAN) by at least two further radiation beams (RB1-1, RB9-1, RB9-2) of at least one second set (P-2, P-3, P-4) of at least two macro base station transmitter apparatuses (MBST1, MBST9) of said macro base station transmitter apparatuses (MBST1, ..., MBST9) of said heterogeneous radio communication network (RAN),
- a determination module (DET-M) configured to determine based on said at least two indications at least one first radio resource restriction adapted to restrict radiation beam transmissions via said at least two radiation beams (RB1-4, RB1-5, RB6-5, RB9-1) towards said first coverage area (PC1) and to determine based on said at least two further indications at least one second radio resource restriction adapted to restrict further radiation beam transmissions via said at least two further radiation beams (RB1-1, RB9-1, RB9-2) towards said at least one second coverage area (PC2), and
- a transmitter module (TRA-M) configured to transmit information of said at least one first radio resource restriction to said first set (P-1) and to transmit further information of said at least one second radio resource restriction to said at least one second set (P-2, P-3, P-4),
wherein said at least one first radio resource restriction and said at least one second radio resource restriction are determined based on following conditions:
- a first condition that for each macro base station transmitter apparatus of said first set (P-1) and of said at least one second set (P-2, P-3, P-4) only a single radiation beam restriction is allocated in a same time slot for a single coverage area of said macro base station transmitter apparatuses (MBST1, ..., MBST9),
- a second condition that radiation beam restrictions are allocated to a same time slot as long as said first condition is fulfilled,
- a third condition that radiation beam restrictions are allocated to a time slot with a smallest index.

9. Network node (NN) according to claim 8, wherein said network node (NN) is operable as one of said macro base station transmitter apparatuses (MBST1, ..., MBST9) of said heterogeneous radio communication network (RAN) or is operable as an additional network node (NN-CR) of said heterogeneous radio communication network (RAN).

FIG. 1

START  MET-NN

S1-NN — Predefining maximum number of macro base station transceivers

S2-NN — Collecting at least one first indication and at least one second indication

S3-NN — Determining at least one radio resource restriction for the at least one pico base station

S3-1-NN — Determining a subset of at least two macro base station transceivers

S3-2-NN — Allocating the at least one radio resource restriction to a radio resource segment

S4-NN — Transmitting information of the at least one radio resource restriction

S5-NN — Obtaining at least one further first indication and at least one further second indication

S6-NN — Determining at least one further radio resource restriction for the at least one further pico base station

S6-1-NN   Determining a further subset of the at least two macro base station transceivers

Belongs one of the MBS transceiver and antenna systems to the further subset and also to the subset?

N

Y

S6-2-NN

S6-3-NN   S6-4-NN

Allocating the at least one further radio resource restriction to the radio resource segment

Allocating the at least one further radio resource restriction to a further radio resource segment

S8-NN Transmitting information of the at least one further radio resource restriction

*FIG. 2*

FIG. 3

MET-PBS

START

S1-PBS — Receiving first information and at least second information
of at least one radio resource restriction

S2-PBS — Receiving at least two indications from at least one mobile station indicating
interference by at least two radiation beams of at least two macro base station
transceivers or retrieving previously stored information

S3-PBS

Is a first one of the at least two indications contained in the first
information and a second one of the at least two indications
contained in the at least second information?   N

Y

S4-PBS

S5-PBS

The at least one mobile
station located at cell border
of pico cell?   Y

N

Scheduling the at least one
mobile station on radio
resources correlated to the
radio resource restriction

*FIG. 4*

END

NN

INFO-IN-NN

CS-NN

INFO-OUT-NN

TRC-M

TRA-M

REC-M

COL-M

DET-M

*FIG. 5*

FIG. 6

Europäisches
Patentamt

European
Patent Office

Office européen
des brevets

# EUROPEAN SEARCH REPORT

Application Number

EP 14 30 6288

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2013/013954 A1 (ALCATEL LUCENT [FR]; GERLACH CHRISTIAN [DE]; BRAUN VOLKER [DE]; WEBER) 31 January 2013 (2013-01-31) | 1-6, 11-15 | INV. H04B7/02 H04W16/28 H04W72/04 |
| Y | * page 1, line 5 - line 6 * * page 3, line 15 - line 18 * * page 5, line 10 - line 19 * * page 4, line 4 - line 7 * * page 6, line 7 - line 10 * * page 7, line 1 - line 4 * ----- | 7-10 | |
| Y | WO 2013/067009 A2 (INTEL CORP [US]; DAVYDOV ALEXEI [RU]; MOROZOV GREGORY [RU]; MALTSEV AL) 10 May 2013 (2013-05-10) * page 5, line 8 - line 14 * ----- | 7-10 | |

TECHNICAL FIELDS
SEARCHED        (IPC)

H04B
H04W

The present search report has been drawn up for all claims

| Place of search | Date of completion of the search | Examiner |
|---|---|---|
| Munich | 24 November 2014 | Brüchert, Thomas |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 14 30 6288

This annex lists the patent family members relating to the patent documents cited in the above-mentioned European search report.
The members are as contained in the European Patent Office EDP file on
The European Patent Office is in no way liable for these particulars which are merely given for the purpose of information.

24-11-2014

| Patent document cited in search report | | Publication date | Patent family member(s) | | Publication date |
|---|---|---|---|---|---|
| WO 2013013954 | A1 | 31-01-2013 | CN 103688583 A<br>EP 2549814 A1<br>US 2014146782 A1<br>WO 2013013954 A1 | | 26-03-2014<br>23-01-2013<br>29-05-2014<br>31-01-2013 |
| WO 2013067009 | A2 | 10-05-2013 | CN 103959837 A<br>EP 2774406 A2<br>US 2013115985 A1<br>WO 2013067009 A2 | | 30-07-2014<br>10-09-2014<br>09-05-2013<br>10-05-2013 |

EPO FORM P0459

For more details about this annex : see Official Journal of the European Patent Office, No. 12/82